# EUROPÄISCHE PATENTSCHRIFT

(11) **EP 3 121 052 B1**
(45) Veröffentlichungstag und Bekanntmachung des Hinweises auf die Patenterteilung: **17.02.2021**
(21) Anmeldenummer: 16001492.4
(22) Anmeldetag: 05.07.2016
(51) Int. Cl.: B60K 28/06

(54) **VORRICHTUNG UND VERFAHREN ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE À UN CONDUCTEUR D'UN VÉHICULE AUTOMOBILE, EN PARTICULIER UN VÉHICULE UTILITAIRE

(30) Priorität: 11.07.2015 DE 102015009029
(43) Veröffentlichungstag der Anmeldung: 25.01.2017
(73) Patentinhaber: MAN Truck & Bus SE, 80995 München (DE)
(72) Erfinder: Adlhart, Helmut, 81825 München (DE); Mohra, Holger, 80805 München (DE); Fritz, Maria, 80637 München (DE); Eisner, Johannes, 81371 München (DE); Glohr, Tobias, 80336 München (DE); Wahn, Nina Alexandra, 82140 Olching (DE); Wenninger, Dominik, 84576 Teising (DE); Wölfel, Christiane, 82418 Hofheim (DE); Zipf, Christoph, 97922 Gerlachsheim (DE)
(74) Vertreter: Liebl, Thomas

(56) Entgegenhaltungen:
- WO-A1-2004/108466

## Beschreibung

Die Erfindung betrifft eine Vorrichtung zur Unterstützung eines Fahrers eines Fahrzeugs, insbesondere eines Nutzfahrzeugs, nach dem Oberbegriff des Patentanspruches 1, ein Verfahren zur Unterstützung eines Fahrers eines Fahrzeugs, insbesondere eines Nutzfahrzeugs, nach dem Oberbegriff des Patentanspruches 14, sowie ein Fahrzeug, insbesondere ein Nutzfahrzeug, mit der Vorrichtung und/oder zur Durchführung des Verfahrens nach Patentanspruch 15.

Fahrzeuge weisen üblicherweise eine Vielzahl von im Fahrzeuginnenraum angeordneten Bedienelementen, beispielsweise Taster und/oder Schalter, auf, die durch einen Fahrer des Fahrzeugs betätigt werden können. Mittels eines einzigen Bedienelements wird dabei wenigstens eine Funktion des Fahrzeugs bedient. Das Bedienelement kann beispielsweise als Lautstärkeregler ausgebildet sein, mittels dem die Lautstärke eines Infotainmentsystems des Fahrzeugs eingestellt bzw. verstellt werden kann. Weiter kann das Bedienelement beispielsweise auch als Temperatur-Einstelltaste ausgebildet sein, mittels der eine Soll-Temperatur einer Klimaautomatik des Fahrzeugs eingestellt bzw. verstellt werden kann.

Aufgabe der Erfindung ist es, eine Vorrichtung und ein Verfahren zur Unterstützung eines Fahrers eines Fahrzeugs, insbesondere eines Nutzfahrzeugs, bereitzustellen, mittels denen die Funktionalität des Fahrzeugs und/oder die Wertigkeit des Fahrzeuginnenraums auf einfache und flexible Weise erhöht werden.

Diese Aufgabe wird durch die Merkmale der unabhängigen Ansprüche gelöst. Bevorzugte Weiterbildungen sind in den Unteransprüchen offenbart.

Der erste Aspekt dieser Erfindung wird durch den Gegenstand des Anspruchs 1 definiert. Auf diese Weise werden die Funktionalität des Fahrzeugs und die Wertigkeit des Fahrzeuginnenraums auf einfache und flexible Weise erhöht, da die Haptik und/oder die Optik und/oder die Akustik des Bedienelements nun in Abhängigkeit von dem aktuellen Zustand des Fahrers eingestellt bzw. verstellt werden. Durch diese Verstellung des Bedienelements ist es beispielsweise möglich, den Fahrer des Fahrzeugs in Abhängigkeit von seinem aktuellen Zustand positiv zu beeinflussen. Beispielsweise kann mittels einer definierten Optik bzw. Haptik bzw. Akustik des Bedienelements die Stimmung des Fahrers, die Konzentrationsfähigkeit des Fahrers oder das Fahrverhalten des Fahrers positiv beeinflusst werden, wenn dies aufgrund des aktuellen Zustands des Fahrers erforderlich bzw. vorteilhaft ist. Zudem kann mittels einer derartigen Verstellung des Bedienelements beispielsweise auch das Fahrerlebnis des Fahrers (User Experience) verbessert werden.

Die Begrifflichkeit "Haptik" ist hier dabei als Wahrnehmung des Fahrers mittels des Tastsinns verstehen und soll sowohl die haptische als auch die taktile Wahrnehmung umfassen. Die Begrifflichkeit "Optik" ist als Wahrnehmung des Fahrers mittels des Sehsinns zu verstehen. Die Begrifflichkeit "Akustik" ist als akustische Wahrnehmung des Fahrers zu verstehen.

Die Begrifflichkeit "Fahrzeugfunktion" ist hier ausdrücklich in einem weiten Sinne zu verstehen. So kann die Fahrzeugfunktion beispielsweise als Einstellfunktion zur Einstellung eines definierten Parameters, beispielsweise der Lautstärke eines Infotainmentsystems des Fahrzeugs, ausgebildet sein. Ebenso kann die Fahrzeugfunktion beispielsweise auch als Auswahlfunktion zur Auswahl wenigstens eines Menüpunktes eines an einem Bildschirm des Fahrzeugs angezeigten Bedienmenüs ausgebildet sein.

In einer bevorzugten Ausgestaltung der erfindungsgemäßen Vorrichtung weist die Fahrerzustand-Erfassungseinrichtung eine Stimmung-Erfassungseinrichtung auf, mittels der die aktuelle Stimmung des Fahrers erfasst und/oder erkannt werden kann. Mittels einer derartigen Stimmung-Erfassungseinrichtung kann die Haptik bzw. die Optik des Bedienelements in Abhängigkeit von der aktuellen Stimmung des Fahrers mittels der Stelleinrichtung eingestellt bzw. verstellt werden. Sofern beispielsweise mittels der Stimmung-Erfassungseinrichtung eine negative Stimmung des Fahrers erkannt wird, kann die Haptik bzw. die Optik des Bedienelements derart eingestellt werden, dass die Stimmung des Fahrers positiv beeinflusst wird. Diese positive Beeinflussung der Stimmung des Fahrers kann beispielsweise durch die Beleuchtung des Bedienelements mit einer definierten Farbe, beispielsweise mit der Farbe Grün oder mit der Farbe Blau, erfolgen. Die Farbe Grün kann eine beruhigende Wirkung haben. Die Farbe Blau kann eine Steigerung der Vigilanz bzw. der Aufmerksamkeit bewirken. Vorzugsweise weist die Stimmung-Erfassungseinrichtung eine Fahrermimik-Erfassungseinrichtung auf, mit der die Mimik des Fahrers erfasst und/oder erkannt werden kann. Über die Mimik des Fahrers kann die aktuelle Stimmung des Fahrers einfach und zuverlässig erkannt werden. Zur Erfassung der Mimik des Fahrers kann die Fahrermimik-Erfassungseinrichtung beispielsweise wenigstens eine Bild-Erfassungseinrichtung, insbesondere eine Kamera, aufweisen, mittels der das Gesicht des Fahrers bildlich und/oder filmisch erfasst werden kann.

Weiter bevorzugt weist die Fahrerzustand-Erfassungseinrichtung eine Fahrweise-Erfassungseinrichtung auf, mittels der die Fahrweise des Fahrers erfasst und/oder erkannt werden kann. Dadurch kann die Haptik bzw. die Optik des Bedienelements in Abhängigkeit von der Fahrweise des Fahrers mittels der Stelleinrichtung eingestellt bzw. verstellt werden. Sofern mittels der Fahrweise-Erfassungseinrichtung beispielsweise erfasst wird, dass die aktuelle Fahrweise des Fahrers besonders aggressiv ist, kann die Haptik bzw. die Optik des Bedienelements mittels der Stelleinrichtung derart eingestellt werden, dass in dem Fahrzeuginnenraum eine den Fahrer beruhigende Atmosphäre vorherrscht. Diese beruhigende Atmosphäre kann beispielsweise durch Beleuchtung des Bedienelements mit einer definierten Farbe, insbesondere mit der Farbe Grün, realisiert werden. Alternativ und/oder zusätzlich zu der Fahrweise-Erfassungseinrichtung kann die Fahrerzustand-Erfassungseinrichtung auch eine Musikauswahl-Erfassungseinrichtung aufweisen, mittels der die Musikauswahl des Fahrers erfasst und/oder erkannt werden kann. Mittels einer derartigen Musikauswahl-Erfassungseinrichtung kann die Haptik bzw. die Optik des Bedienelements dann in Abhängigkeit von der aktuellen Musikauswahl des Fahrers mittels der Stelleinrichtung eingestellt bzw. verstellt werden. Mit der Information über die aktuelle Musikauswahl kann beispielsweise ermittelt werden, ob der Fahrer aktuell einen Musikstil anhört, der eine aggressive Wirkung auf den Fahrer haben könnte.

Vorzugsweise weist die Fahrerzustand-Erfassungseinrichtung eine Körperinformation-Erfassungseinrichtung auf, mittels der wenigstens eine, insbesondere physiologische, Information über den Körper des Fahrers und/oder über den aktuellen Körperzustand des Fahrers erfasst werden kann. Mittels der Körperinformation-Erfassungseinrichtung kann die Haptik bzw. die Optik des Bedienelements dann in Abhängigkeit von dem Körper des Fahrers und/oder in Abhängigkeit von dem aktuellen Körperzustand des Fahrers mittels der Stelleinrichtung eingestellt bzw. verstellt werden. Bevorzugt ist dabei vorgesehen, dass die wenigstens eine Information durch das Geschlecht des Fahrers und/oder durch den aktuellen Puls des Fahrers und/oder durch die aktuelle Hauttemperatur des Fahrers gebildet ist. Mittels der Information zu dem aktuellen Puls des Fahrers kann beispielsweise eine hohe Müdigkeit des Fahrers erfasst bzw. erkannt werden. In diesem Fall kann dann beispielsweise die Helligkeit der Beleuchtung des Bedienelements erhöht und/oder das Bedienelement mit einer definierten Farbe, insbesondere mit der Farbe Blau, beleuchtet werden. Ebenso kann mittels der Information über den aktuellen Puls des Fahrers beispielsweise eine große Anspannung des Fahrers erfasst bzw. erkannt werden. In diesem Fall kann dann beispielsweise das Bedienelement mit einer den Fahrer beruhigenden Farbe, insbesondere mit der Farbe Grün, beleuchtet werden. Mittels der Information zu der aktuellen Hauttemperatur des Fahrers kann beispielsweise ermittelt werden, ob es dem Fahrer aktuell zu warm oder zu kalt ist. Sofern es dem Fahrer zu kalt ist, kann das Bedienelement beispielsweise mittels einer Heizeinrichtung aufgeheizt werden. Betätigt der Fahrer dann das Bedienelement, wird er auf besonders komfortable Weise gewärmt. Sofern es dem Fahrer zu warm ist, kann das Bedienelement beispielsweise mittels einer Kühleinrichtung gekühlt werden. Betätigt der Fahrer dann das Bedienelement, wird er auf komfortable Weise gekühlt. Alternativ und/oder zusätzlich zu der Kühlung bzw. Aufheizung des Bedienelements kann beispielsweise auch die Beleuchtung des Bedienelements verstellt werden, wenn es dem Fahrer zu kalt oder zu warm ist. Alternativ und/oder zusätzlich zu der Hauttemperatur kann beispielsweise auch die Innenraumtemperatur des Fahrzeugs erfasst werden. Mittels der Information zu dem Geschlecht des Fahrers kann beispielsweise eine Druckkraft zur Druckbetätigung des als druckbetätigbare Taste ausgebildeten Bedienelements in Abhängigkeit von dem Geschlecht des Fahrers eingestellt bzw. verstellt werden. Weiter kann mittels der Körperinformation-Erfassungseinrichtung beispielsweise auch die Pupillengröße des Fahrers und/oder das Lidschlagverhalten des Fahrers und/oder die Atmung des Fahrers und/oder die Hautleitfähigkeit des Fahrers erfasst werden.

Weiter bevorzugt weist die Fahrerzustand-Erfassungseinrichtung eine Fahrtinformation-Erfassungseinrichtung auf, mittels der wenigstens eine Information über die aktuelle Fahrt des Fahrzeugs erfasst werden kann. Auf diese Weise kann die Haptik bzw. die Optik des Bedienelements in Abhängigkeit von der wenigstens einen Information über die aktuelle Fahrt des Fahrzeugs mittels der Stelleinrichtung eingestellt bzw. verstellt werden. Bevorzugt ist dabei vorgesehen, dass die wenigstens eine Information durch die aktuelle Beladung des Fahrzeugs und/oder durch die Länge der Fahrstrecke des Fahrzeugs gebildet ist. Über die Information zu der aktuellen Beladung des Fahrzeugs kann beispielsweise ermittelt werden, ob mit dem Fahrzeug aktuell ein Gefahrgut transportiert wird oder nicht. Sofern mittels des Fahrzeugs Gefahrgut transportiert wird, kann beispielsweise das Bedienelement mit einer definierten Farbe, insbesondere mit der Farbe Rot, beleuchtet werden. Mittels der Information zu der Länge der Fahrstrecke des Fahrzeugs kann beispielsweise ermittelt werden, ob es sich bei der aktuellen Fahrt des Fahrzeugs um eine Langstreckenfahrt oder um eine Kurzstreckenfahrt handelt. Sofern es sich bei der aktuellen Fahrt beispielsweise um eine Langstreckenfahrt handelt, kann beispielsweise die Haptik bzw. die Optik des Bedienelements derart eingestellt werden, dass eine dauerhafte hohe Konzentrationsfähigkeit des Fahrers gefördert wird. Diese Förderung der Konzentrationsfähigkeit des Fahrers kann beispielsweise durch Beleuchtung des Bedienelements mit einer definierten Farbe, insbesondere mit der Farbe Blau, realisiert werden.

In einer bevorzugten konkreten Ausgestaltung der erfindungsgemäßen Vorrichtung ist das Bedienelement durch eine Taste gebildet, um das Bedienelement einfach und kompakt auszubilden. Bevorzugt ist dabei vorgesehen, dass die Taste druckbetätigbar und/oder durch Berührung betätigbar ist.

Sofern die Taste druckbetätigbar ist, weist die Stelleinrichtung vorzugsweise eine Tastenhub-Stelleinrichtung auf, mittels der ein Tastenhub als Taste als Haptikparameter eingestellt und/oder verstellt werden kann. Über den Tastenhub kann die Haptik der Taste auf effektive Weise verstellt werden.

Bevorzugt weist die Stelleinrichtung eine Heiz- und/oder Kühleinrichtung auf, mittels der die Oberflächentemperatur der Taste als Haptikparameter eingestellt und/oder verstellt werden kann. Über die Oberflächentemperatur der Taste kann die Haptik der Taste einfach und effektiv verstellt werden.

Sofern die Taste druckbetätigbar ist, weist die Stelleinrichtung vorzugsweise eine Druckkraft-Stelleinrichtung auf, mittels der eine Druckkraft zur Druckbetätigung der Taste als Haptikparameter eingestellt und/oder verstellt werden kann. Über die Druckkraft kann die Haptik der Taste ebenfalls auf besonders effektive Weise verstellt werden.

Vorzugsweise ist eine Beleuchtungseinrichtung vorgesehen, mittels der die Taste beleuchtet werden kann, wobei die Stelleinrichtung eine signaltechnisch mit der Beleuchtungseinrichtung verbundene Beleuchtungs-Stelleinrichtung aufweist, mittels der die Beleuchtung der Taste als Optikparamater eingestellt und/oder verstellt werden kann. Über die Beleuchtung der Taste als Optikparameter kann die Optik der Taste auf besonders einfache und gleichzeitig effektive Weise verstellt werden.

Bevorzugt kann mittels der Beleuchtungs-Stelleinrichtung die Farbe und/oder die Helligkeit der Beleuchtung der Taste verstellt und/oder eingestellt werden, um die Optik der Taste auf besonders effektive Weise verstellen zu können. Alternativ und/oder zusätzlich kann mittels der Beleuchtungs-Stelleinrichtung auch die Beleuchtung der Taste eingeschaltet und ausgeschaltet werden. Dadurch kann die Beleuchtung der Taste auf besonders einfache und kostengünstige Weise mittels der Beleuchtungs-Stelleinrichtung verstellt werden.

Vorzugsweise ist wenigstens eine akustische Rückmeldungseinrichtung vorgesehen, mittels der bei einer Betätigung der Taste ein akustisches Rückmeldungssignal an den Fahrer ausgegeben werden kann, wobei die Stelleinrichtung eine Signal-Stelleinrichtung aufweist, mittels der das akustische Rückmeldungssignal der Rückmeldungseinrichtung als Akustikparameter einstellbar und/oder verstellbar ist. Über das akustische Rückmeldungssignal kann die Akustik der Taste einfach und effektiv verstellt werden. Die akustische Rückmeldungseinrichtung kann dabei beispielsweise durch wenigstens einen Lautsprecher oder durch die Mechanik einer Taste gebildet sein

In einer weiteren bevorzugten Ausgestaltung ist das Bedienelement durch einen Touchscreen gebildet, wobei mittels des Touchscreens wenigstens ein Funktionssymbol angezeigt werden kann, wobei durch Berührung eines das Funktionssymbol anzeigenden Touchscreenbereichs die dem Touchscreenbereich zugeordnete Fahrzeugfunktion bedient werden kann. Bevorzugt ist dabei vorgesehen, dass die Stelleinrichtung eine Funktionssymbol-Stelleinrichtung aufweist, mittels der die Form und/oder die Farbe und/oder die Gestalt des wenigstens einen mittels des Touchscreens angezeigten Funktionssymbols einstellbar und/oder verstellbar ist. Dadurch kann die Optik des Touchscreens auf besonders einfache und effektive Weise verstellt werden.

Vorzugsweise weist der Touchscreen eine Druckbetätigungsfunktion (Force Touch) auf, mittels der der Touchscreen druckbetätigt werden kann, wobei durch Druckbetätigung des Touchscreens wenigstens eine Fahrzeugfunktion bedient werden kann. Bevorzugt weist die Stelleinrichtung dann eine Druckkraft-Stelleinrichtung auf, mittels der eine Druckkraft zur Druckbetätigung des Touchscreens als Haptikparameter einstellbar und/oder verstellbar ist.

Der Zweite Aspekt dieser Erfindung wird durch den Verfahrensanspruch 14 definiert. Die sich durch die erfindungsgemäße Verfahrensführung ergebenden Vorteile sind identisch mit den bereits gewürdigten Vorteilen der erfindungsgemäßen Vorrichtung, so dass diese an dieser Stelle nicht wiederholt werden.

Des Weiteren wird auch ein Fahrzeug, insbesondere ein Nutzfahrzeug, mit der erfindungsgemäßen Vorrichtung und/oder zur Durchführung des erfindungsgemäßen Verfahrens beansprucht. Die sich hieraus ergebenden Vorteile sind ebenfalls identisch mit den bereits gewürdigten Vorteilen der erfindungsgemäßen Vorrichtung und werden an dieser Stelle ebenfalls nicht wiederholt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung einen Teil einer ersten Ausführungsform einer erfindungsgemäßen Vorrichtung;
- Fig. 2: eine Darstellung, anhand der der Aufbau der ersten Ausführungsform der erfindungsgemäßen Vorrichtung erläutert wird;
- Fig. 3: in einer Darstellung gemäß Fig. 1 eine zweite Ausführungsform der erfindungsgemäßen Vorrichtung; und
- Fig. 4: eine Darstellung, anhand der der Aufbau der zweiten Ausführungsform der erfindungsgemäßen Vorrichtung erläutert wird.

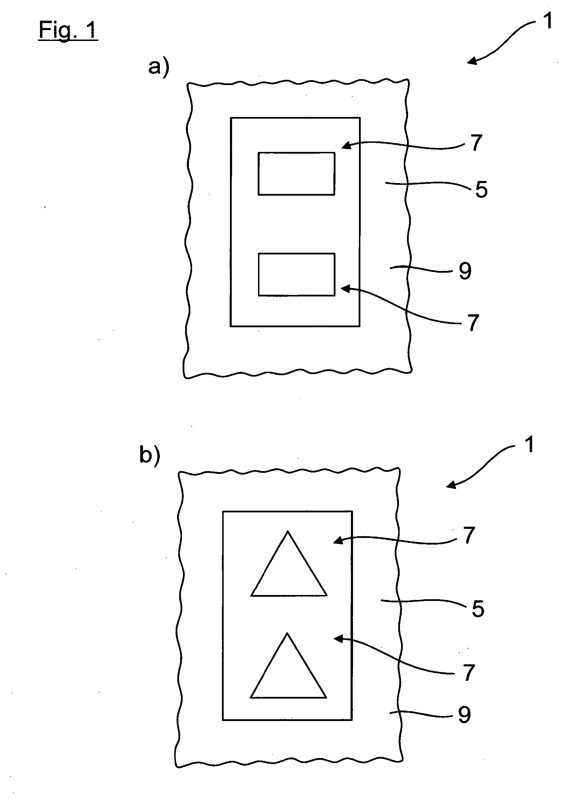

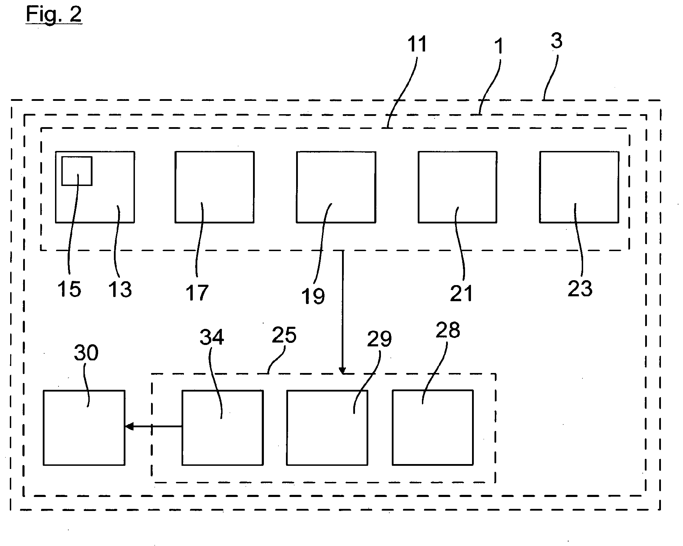

In Fig. 1 ist ein Teil einer ersten Ausführungsform einer erfindungsgemäßen Vorrichtung 1 eines in Fig. 2 mit gestrichelten Linien angedeuteten Fahrzeugs 3 gezeigt. Die Vorrichtung 1 weist einen Touchscreen 5 auf, mittels dem hier beispielhaft zwei Funktionssymbole angezeigt werden. Durch Berührung eines das jeweilige Funktionssymbol anzeigenden Touchscreenbereichs 7 des Touchscreens 5 kann eine dem jeweiligen Touchscreenbereich 7 zugeordnete Fahrzeugfunktion bedient werden. Die Fahrzeugfunktion kann dabei beispielsweise als Einstellfunktion zur Einstellung eines definierten Parameters, beispielsweise der Lautstärke eines Infotainmentsystems des Fahrzeugs 3, oder als Auswahlfunktion zur Auswahl eines Menüpunktes eines an einem Bildschirm des Fahrzeugs 3 angezeigten Bedienmenüs ausgebildet sein. Weiter weist der Touchscreen 5 hier beispielhaft auch eine Druckbetätigungsfunktion (Force Touch) auf, mittels der der Touchscreen 5 druckbetätigt werden kann. Durch diese Druckbetätigung des Touchscreens 5 kann wenigstens eine Fahrzeugfunktion bedient werden. Der Touchscreen 5 des Fahrzeugs 3 ist hier zudem in ein Gehäuse 9 des Fahrzeugs 3 eingefasst.

Wie in Fig. 2 gezeigt ist, weist die Vorrichtung 1 eine Fahrerzustand-Erfassungseinrichtung 11 auf, mittels der der aktuelle Zustand eines Fahrers des Fahrzeugs 3 erfasst bzw. erkannt werden kann. Die Fahrerzustand-Erfassungseinrichtung 11 weist hier beispielhaft eine Stimmung-Erfassungseinrichtung 13 auf, mittels der die aktuelle Stimmung des Fahrers erfasst und/oder erkannt werden kann. Weiter weist die Stimmung-Erfassungseinrichtung 13 hier beispielhaft eine Fahrermimik-Erfassungseinrichtung 15 auf, mittels der die Mimik des Fahrers erfasst und/oder erkannt werden kann. Die Erfassung der Mimik des Fahrers kann beispielsweise mittels einer Bild-Erfassungseinrichtung, insbesondere einer Kamera, erfolgen, mittels der das Gesicht des Fahrers bildlich und/oder filmisch erfasst werden kann.

Des Weiteren weist die Fahrerzustand-Erfassungseinrichtung 11 hier beispielhaft auch eine Fahrweise-Erfassungseinrichtung 17 auf, mittels der die aktuelle Fahrweise des Fahrers erfasst und/oder erkannt werden kann. Zudem weist die Fahrerzustand-Erfassungseinrichtung 11 hier beispielhaft auch eine Musikauswahl-Erfassungseinrichtung 19 auf, mittels der die aktuelle Musikauswahl des Fahrers erkannt und/oder erfasst werden kann. Weiter weist die Fahrerzustand-Erfassungseinrichtung 11 hier beispielhaft auch eine Körperinformation-Erfassungseinrichtung 21 auf, mittels der hier beispielhaft mehrere Informationen über den aktuellen Körperzustand des Fahrers erfasst werden können. Die mehreren Informationen über den aktuellen Körperzustand des Fahrers sind hier beispielhaft durch das Geschlecht des Fahrers, den aktuellen Puls des Fahrers und die aktuelle Körpertemperatur des Fahrers gebildet. Des Weiteren weist die Fahrerzustand-Erfassungseinrichtung 11 hier beispielhaft auch eine Fahrtinformation-Erfassungseinrichtung 23 auf, mittels der hier beispielhaft mehrere Informationen über die aktuelle Fahrt des Fahrzeugs 3 erfasst werden können. Die mehreren Informationen sind hier durch die aktuelle Beladung des Fahrzeugs 3 und die Länge der Fahrstrecke des Fahrzeugs 3 gebildet.

Gemäß Fig. 2 weist die Vorrichtung 1 weiter auch eine signaltechnisch mit der Fahrerzustand-Erfassungseinrichtung 11 verbundene Stelleinrichtung 25 auf, mittels der in Abhängigkeit von dem mittels der Fahrerzustand-Erfassungseinrichtung 11 erfassten, aktuellen Zustand des Fahrers hier beispielhaft ein die Haptik des Touchscreens 5 beeinflussender Haptikparameter, ein die Optik der des Touchpads 5 beeinflussender Optikparameter und ein die Akustik des Touchscreens 5 beeinflussender Akustikparameter selbsttätig bzw. automatisch eingestellt und/oder verstellt werden.

Der Haptikparameter ist hier beispielhaft die Druckkraft zur Druckbetätigung des Touchscreens 5. Diese Druckkraft kann mittels einer Druckkraft-Stelleinrichtung 29 der Stelleinrichtung 25 eingestellt und/oder verstellt werden.

Der Optikparameter ist hier beispielhaft die Gestalt der mittels des Touchscreens 5 angezeigten Funktionssymbole. Die Gestalt des jeweiligen Funktionssymbols kann mittels einer Funktionssymbol-Stelleinrichtung 28 (Fig. 2) der Stelleinrichtung 25 eingestellt bzw. verstellt werden. Alternativ und/oder zusätzlich zu der Gestalt des Funktionssymbols könnte beispielsweise auch die Form und/oder die Farbe und/oder die Helligkeit des jeweiligen Funktionssymbols als Optikparameter eingestellt bzw. verstellt werden.

Der Akustikparameter ist hier beispielhaft ein akustisches Rückmeldungssignal bzw. ein akustisches Feedbacksignal, das bei einer Berührung des jeweiligen Touchscreenbereichs 7 mittels einer akustischen Rückmeldungseinrichtung 30 an den Fahrer ausgegeben wird. Das akustische Rückmeldungssignal kann mittels einer eine Signal-Stelleinrichtung 34 der Stelleinrichtung 25 (Fig. 2) eingestellt und/oder verstellt werden.

Bei der in Fig. 1a gezeigten Einstellung der Haptik, der Optik und der Akustik des Touchscreens 5 sind hier beispielhaft die an dem Touchscreen 5 angezeigten Funktionssymbole als Vierecke ausgebildet. Zudem entspricht bei der in Fig. 1a gezeigten Einstellung des Touchscreens 5 die Druckkraft zur Druckbetätigung des Touchscreens 7 einem ersten Druckwert. Weiter wird bei der in Fig. 1a gezeigten Einstellung des Touchscreens 5 bei einer Berührung des jeweiligen Touchscreenbereichs 7 kein akustisches Rückmeldungssignal mittels der Rückmeldungseinrichtung 30 an den Fahrer ausgegeben.

Bei der in Fig. 1b gezeigten Einstellung der Haptik, der Optik und der Akustik des Touchscreens 5 sind hier beispielhaft die an Touchscreen 5 angezeigten Funktionssymbole als Dreiecke ausgebildet. Zudem entspricht bei der in Fig. 1b gezeigten Einstellung des Touchscreens 5 die Druckkraft zur Druckbetätigung des Touchscreens 7 einem sich von dem ersten Druckwert unterscheidenden zweiten Druckwert. Weiter wird bei der in Fig. 1b gezeigten Einstellung des Touchscreens 5 bei einer Betätigung des jeweiligen Touchscreenbereichs 7 ein akustisches Rückmeldungssignal mittels der Rückmeldungseinrichtung 30 an den Fahrer ausgegeben.

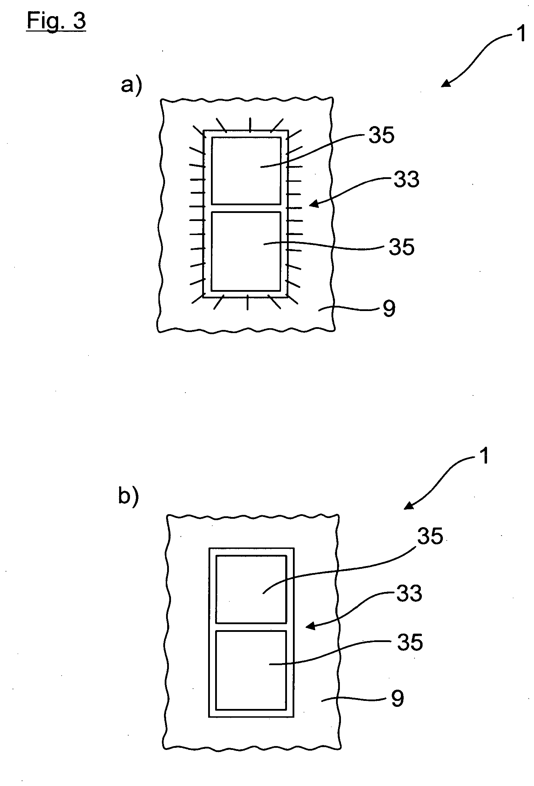

In Fig. 3 ist ein Teil einer zweiten Ausführungsform der erfindungsgemäßen Vorrichtung 1 gezeigt. Im Vergleich zu der in Fig. 1 gezeigten ersten Ausführungsform weist die zweite Ausführungsform der Vorrichtung 1 keinen Touchscreen 5, sondern ein druckbetätigbares Tastenfeld 33 auf. Das Tastenfeld 33 weist hier beispielhaft mehrere, hier zwei, druckbetätigbare Tasten 35 auf.

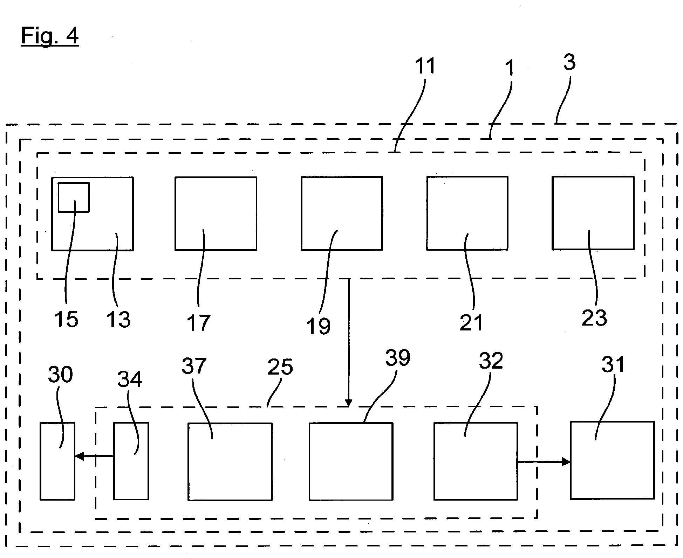

Gemäß Fig. 4 weist die Stelleinrichtung 25 der zweiten Ausführungsform der Vorrichtung 1 eine Tastenhub-Stelleinrichtung 37 auf, mittels der der Tastenhub der Tasten 35 als Haptikparameter eingestellt und/oder verstellt werden kann. Zudem weist die Vorrichtung 1 hier beispielhaft auch eine Druckkraft-Stelleinrichtung 39 auf, mittels der eine Druckkraft zur Druckbetätigung der Tasten 35 als Haptikparameter eingestellt und/oder verstellt werden kann. Des Weiteren können die Tasten 35 des Tastenfelds 33 hier beispielhaft mittels einer Beleuchtungseinrichtung 31 beleuchtet werden. Mittels einer signaltechnisch mit der Beleuchtungseinrichtung 32 verbundenen Beleuchtungs-Stelleinrichtung 32 kann hier zudem die Beleuchtung der Tasten 35 als Optikparameter eingestellt und/oder verstellt werden. Konkret kann mittels der Beleuchtungs-Stelleinrichtung 32 hier beispielhaft die Beleuchtung der Tasten 35 eingeschaltet und ausgeschaltet werden. Alternativ und/oder zusätzlich hierzu könnte mittels der Beleuchtungs-Stelleinrichtung 32 beispielsweise auch die Farbe und/oder die Helligkeit der Beleuchtung der Tasten 35 verstellt bzw. eingestellt werden.

Bei der in Fig. 3a gezeigten Einstellung der Haptik, der Optik und der Akustik der der Tasten 35 ist hier beispielhaft die Beleuchtung der Tasten 35 eingeschaltet. Zudem entspricht bei der in Fig. 3a gezeigten Einstellung der Tasten 35 die Druckkraft zur Druckbetätigung der Tasten 35 einem ersten Druckwert und der Tastenhub der Tasten 35 einem ersten Hubwert. Weiter wird bei der in Fig. 3a gezeigten Einstellung der Tasten 35 bei einer Betätigung der jeweiligen Taste 35 ein erstes akustisches Rückmeldungssignal mittels der Rückmeldungseinrichtung 30 an den Fahrer ausgegeben.

Bei der in Fig. 3b gezeigten Einstellung der Haptik, der Optik und der Akustik der der Tasten 35 ist hier beispielhaft die Beleuchtung der Tasten 35 ausgeschaltet. Zudem entspricht bei der in Fig. 3b gezeigten Einstellung der der Tasten 35 die Druckkraft zur Druckbetätigung der Tasten 35 einem sich von dem ersten Druckwert unterscheidenden zweiten Druckwert und der Tastenhub der Tasten 35 einem sich von dem ersten Hubwert unterscheidenden zweiten Hubwert. Weiter wird bei der in Fig. 3b gezeigten Einstellung der der Tasten 35 bei einer Betätigung der jeweiligen der Tasten 35 ein sich von dem ersten akustischen Rückmeldungssignal unterscheidendes zweites akustisches Rückmeldungssignal mittels der Rückmeldungseinrichtung 30 an den Fahrer ausgegeben.

### Bezugszeichenliste

- 1: Vorrichtung
- 3: Fahrzeug
- 5: Touchpad
- 7: Tastflächenbereich
- 9: Gehäuse
- 11: Fahrerzustand-Erfassungseinrichtung
- 13: Stimmung-Erfassungseinrichtung
- 15: Fahrermimik-Erfassungseinrichtung
- 17: Fahrweise-Erfassungseinrichtung
- 19: Musikauswahl-Erfassungseinrichtung
- 21: Körperinformation-Erfassungseinrichtung
- 23: Fahrtinformation-Erfassungseinrichtung
- 25: Stelleinrichtung
- 27: Wandbereich
- 28: Funktionssymbol-Stelleinrichtung
- 29: Druckkraft-Stelleinrichtung
- 30: Rückmeldungseinrichtung
- 31: Beleuchtungseinrichtung
- 32: Beleuchtungs-Stelleinrichtung
- 33: Tastenfeld
- 34: Signal-Stelleinrichtung
- 35: Taste
- 37: Tastenhub-Stelleinrichtung
- 39: Druckkraft-Stelleinrichtung

## Patentansprüche

1. Vorrichtung zur Unterstützung eines Fahrers eines Fahrzeugs, insbesondere eines Nutzfahrzeugs, mit wenigstens einem durch den Fahrer betätigbaren Bedienelement (7; 35), mittels dem wenigstens eine Fahrzeugfunktion bedienbar ist, wobei eine Fahrerzustand-Erfassungseinrichtung (11) vorgesehen ist, mittels der der aktuelle Zustand des Fahrers erfassbar und/oder erkennbar ist, **dadurch gekennzeichnet,**
**dass** eine signaltechnisch mit der Fahrerzustand-Erfassungseinrichtung (11) verbundene Stelleinrichtung (25) vorgesehen ist, mittels der in Abhängigkeit von dem mittels der Fahrerzustand-Erfassungseinrichtung (11) erfassten, aktuellen Zustand des Fahrers wenigstens ein die Haptik des Bedienelements (7; 35) beeinflussender Haptikparameter selbsttätig einstellbar und/oder verstellbar ist.

2. Vorrichtung nach Anspruch 1, **dadurch gekennzeichnet, dass** die Fahrerzustand-Erfassungseinrichtung (11) eine Stimmung-Erfassungseinrichtung (13) aufweist, mittels der die aktuelle Stimmung des Fahrers erfassbar und/oder erkennbar ist, wobei bevorzugt vorgesehen ist, dass die Stimmung-Erfassungseinrichtung (13) eine Fahrermimik-Erfassungseinrichtung (15) aufweist, mittels der die Mimik des Fahrers erfassbar und/oder erkennbar ist.

3. Vorrichtung nach Anspruch 1 oder 2, **dadurch gekennzeichnet, dass** die Fahrerzustand-Erfassungseinrichtung (11) eine Fahrweise-Erfassungseinrichtung (17) aufweist, mittels der die Fahrweise des Fahrers erfassbar und/oder erkennbar ist, und/oder dass die Fahrerzustand-Erfassungseinrichtung (11) eine Musikauswahl-Erfassungseinrichtung (19) aufweist, mittels der die aktuelle Musikauswahl des Fahrers erfassbar und/oder erkennbar ist.

4. Vorrichtung nach einem der vorhergehenden Ansprüche, **dadurch gekennzeichnet, dass** die Fahrerzustand-Erfassungseinrichtung (11) eine Körperinformation-Erfassungseinrichtung (21) aufweist, mittels der wenigstens eine, insbesondere physiologische, Information über den Körper und/oder über den aktuellen Körperzustand des Fahrers erfassbar ist, wobei bevorzugt vorgesehen ist, dass die wenigstens eine Information durch das Geschlecht des aktuellen Fahrers und/oder durch den aktuellen Puls des Fahrers und/oder durch die aktuelle Hauttemperatur des Fahrers gebildet ist.

5. Vorrichtung nach einem der vorhergehenden Ansprüche, **dadurch gekennzeichnet, dass** die Fahrerzustand-Erfassungseinrichtung (11) eine Fahrtinformation-Erfassungseinrichtung aufweist, mittels der wenigstens eine Information über die aktuelle Fahrt des Fahrzeugs (3) erfassbar ist, wobei bevorzugt vorgesehen ist, dass die wenigstens eine Information durch die aktuelle Beladung des Fahrzeugs (3) und/oder durch die Länge der Fahrstrecke des Fahrzeugs (3) gebildet ist.

6. Vorrichtung nach einem der vorhergehenden Ansprüche, **dadurch gekennzeichnet, dass** das Bedienelement durch eine Taste (35) gebildet ist, wobei bevorzugt vorgesehen ist, dass die Taste (35) druckbetätigbar und/oder durch Berührung betätigbar ist.

7. Vorrichtung nach Anspruch 6, **dadurch gekennzeichnet, dass** die Taste (35) druckbetätigbar ist, wobei die Stelleinrichtung eine Tastenhub-Stelleinrichtung (37) aufweist, mittels der ein Tastenhub der Taste (35) als Haptikparameter einstellbar und/oder verstellbar ist.

8. Vorrichtung nach Anspruch 6 oder 7, **dadurch gekennzeichnet, dass** die Stelleinrichtung (25) eine Heiz- und/oder Kühleinrichtung aufweist, mittels der die Oberflächentemperatur der Taste (35) als Haptikparameter einstellbar und/oder verstellbar ist.

9. Vorrichtung nach einem der Ansprüche 5 bis 7, **dadurch gekennzeichnet, dass** die Taste (35) druckbetätigbar ist, wobei die Stelleinrichtung (25) eine Druckkraft-Stelleinrichtung (39) aufweist, mittels der eine Druckkraft zur Druckbetätigung der Taste (35) als Haptikparameter einstellbar und/oder verstellbar ist.

10. Vorrichtung nach einem der Ansprüche 6 bis 9, **dadurch gekennzeichnet, dass** mittels der Stelleinrichtung (25) in Abhängigkeit von dem mittels der Fahrerzustand-Erfassungseinrichtung (11) erfassten, aktuellen Zustand des Fahrers wenigstens ein die Optik des Bedienelements (7; 35) beeinflussender Optikparameter selbsttätig einstellbar und/oder verstellbar ist, dass eine Beleuchtungseinrichtung (31) vorgesehen ist, mittels der die Taste (35) beleuchtbar ist, wobei die Stelleinrichtung (25) eine Beleuchtungs-Stelleinrichtung (32) aufweist, mittels der die Beleuchtung der Taste (35) als Optikparameter einstellbar und/oder verstellbar ist.

11. Vorrichtung nach Anspruch 10, **dadurch gekennzeichnet, dass** mittels der Beleuchtungs-Stelleinrichtung (32) die Farbe und/oder die Helligkeit der Beleuchtung der Taste (35) verstellbar und/oder einstellbar ist, und/oder dass mittels der Beleuchtungs-Stelleinrichtung (32) die Beleuchtung der Taste (35) einschaltbar und ausschaltbar ist.

12. Vorrichtung nach einem der vorhergehenden Ansprüche, **dadurch gekennzeichnet, dass** das Bedienelement durch einen Touchscreen (5) gebildet ist, wobei mittels des Touchscreens (5) wenigstens ein Funktionssymbol anzeigbar ist, wobei durch Berührung eines das Funktionssymbol anzeigenden Touchscreenbereichs (7) eine dem Touchscreenbereich (7) zugeordnete Fahrzeugfunktion bedienbar ist, wobei bevorzugt vorgesehen ist, dass mittels der Stelleinrichtung (25) in Abhängigkeit von dem mittels der Fahrerzustand-Erfassungseinrichtung (11) erfassten, aktuellen Zustand des Fahrers wenigstens ein die Optik des Bedienelements (7; 35) beeinflussender Optikparameter selbsttätig einstellbar und/oder verstellbar ist, und dass die Stelleinrichtung (25) eine Funktionssymbol-Stelleirichtung (28) aufweist, mittels der die Form und/oder die Farbe und/oder die Gestalt des wenigstens einen mittels des Touchscreens (5) angezeigten Funktionssymbols als Optikparameter einstellbar und/oder verstellbar ist.

13. Vorrichtung nach einem der vorhergehenden Ansprüche, **dadurch gekennzeichnet, dass** mittels der Stelleinrichtung (25) in Abhängigkeit von dem mittels der Fahrerzustand-Erfassungseinrichtung (11) erfassten, aktuellen Zustand des Fahrers wenigstens ein die Akustik des Bedienelements (7; 35) beeinflussender Akustikparameter selbsttätig einstellbar und/oder verstellbar ist, dass wenigstens eine akustische Rückmeldungseinrichtung (30) vorgesehen ist, mittels der bei einer Betätigung des Bedienelements (7; 35) ein akustisches Rückmeldungssignal an den Fahrer ausgebbar ist, wobei die Stelleinrichtung (25) eine Signal-Stelleinrichtung (34) aufweist, mittels der das akustische Rückmeldungssignal der Rückmeldungseinrichtung als Akustikparameter einstellbar und/oder verstellbar ist.

14. Verfahren zur Unterstützung eines Fahrers eines Fahrzeugs, insbesondere eines Nutzfahrzeugs, zum Betreiben einer Vorrichtung nach einem der vorhergehenden Ansprüche, mit wenigstens einem durch den Fahrer betätigbaren Bedienelement (7; 35), mittels dem wenigstens eine Fahrzeugfunktion bedienbar ist, wobei eine Fahrerzustand-Erfassungseinrichtung (11) vorgesehen ist, mittels der der aktuelle Zustand des Fahrers erfassbar und/oder erkennbar ist, **dadurch gekennzeichnet,**
**dass** eine signaltechnisch mit der Fahrerzustand-Erfassungseinrichtung (11) verbundene Stelleinrichtung (25) vorgesehen ist, mittels der in Abhängigkeit von dem mittels der Fahrerzustand-Erfassungseinrichtung (11) erfassten, aktuellen Zustand des Fahrers wenigstens ein die Haptik des Bedienelements (7; 35) beeinflussender Haptikparameter selbsttätig eingestellt und/oder verstellt wird.

15. Fahrzeug, insbesondere Nutzfahrzeug, mit einer Vorrichtung nach einem der Ansprüche 1 bis 13 und/oder zur Durchführung eines Verfahrens nach Anspruch 14.

## Claims

1. A device for assisting a driver of a vehicle, in particular of a utility vehicle, having at least one operator control element (7; 35) which can be activated by the driver and by means of which at least one vehicle function can be controlled, wherein a driver's state-sensing device (11) is provided, by means of which driver's state-sensing device (11) the current state of the driver can be sensed and/or detected, **characterized**
**in that** an actuating device (25) which is connected in terms of signalling technology to the driver's state-sensing device (11) is provided, by means of which actuating device (25) at least one haptic parameter which influences the haptics of the operator control element (7; 35) can be automatically set and/or adjusted as a function of the current state of the driver which is sensed by means of the driver's state-sensing device (11).

2. The device according to Claim 1, **characterized in that** the driver's state-sensing device (11) has a mood-sensing device (13) by means of which the current mood of the driver can be sensed and/or detected, wherein there is preferably provision that the mood-sensing device (13) has a driver facial expression-sensing device (15) by means of which the driver's facial expression can be sensed and/or detected.

3. The device according to Claim 1 or 2, **characterized in that** the driver's state-sensing device (11) has a driving style-sensing device (17) by means of which the driving style of the driver can be sensed and/or detected, and/or **in that** the driver's state-sensing device (11) has a music selection-sensing device (19) by means of which the current music selection of the driver can be sensed and/or detected.

4. The device according to one of the preceding claims, **characterized in that** the driver's state-sensing device (11) has a body state-sensing device (21) by means of which at least one, in particular physiological, information item about the body and/or about the current state of the body of the driver can be sensed, wherein there is preferably provision that the at least one information item is formed by the gender of the current driver and/or by the current pulse rate of the driver and/or by the current skin temperature of the driver.

5. The device according to one of the preceding claims, **characterized in that** the driver's state-sensing device (11) has a journey information-sensing device by means of which at least one information item about the current journey of the vehicle (3) can be sensed, wherein there is preferably provision that the at least one information item is formed by the current load of the vehicle (3) and/or by the length of the route travelled along by the vehicle (3).

6. The device according to one of the preceding claims, **characterized in that** the operator control element is formed by a push button key (35), wherein there is preferably provision that the push button key (35) can be activated by pressure and/or can be activated by touch.

7. The device according to Claim 6, **characterized in that** the push button key (35) can be activated by pressure, wherein the actuating device has a key stroke-actuating device (37) by means of which a key stroke of the push button key (35) can be set and/or adjusted as a haptic parameter.

8. The device according to Claim 6 or 7, **characterized in that** the actuating device (25) has a heating device and/or cooling device by means of which the surface temperature of the push button key (35) can be set and/or adjusted as a haptic parameter.

9. The device according to one of Claims 5 to 7, **characterized in that** the push button key (35) can be activated by pressure, wherein the actuating device (25) has a compressive force-actuating device (39) by means of which a compressive force for activating the push button key (35) by pressure can be set and/or adjusted as a haptic parameter.

10. The device according to one of Claims 6 to 9, **characterized in that**, by means of the actuating device (25) an optic parameter which influences the optics of the operator control element (7; 35) can be set and/or adjusted automatically as a function of the current state of the driver which is sensed by means of the driver's state-sensing device (11), **in that** a lighting device (31) by means of which the push button key (35) can be illuminated is provided, wherein the actuating device (25) has a lighting-actuating device (32) by means of which the lighting of the push button key (35) can be set and/or adjusted as an optic parameter.

11. The device according to Claim 10, **characterized in that** the colour and/or the brightness of the lighting of the push button key (35) can be adjusted and/or set by means of the lighting-actuating device (32), and/or **in that** the lighting of the push button key (35) can be set and switched off by means of the lighting-actuating device (32).

12. The device according to one of the preceding claims, **characterized in that** the operator control element is formed by a touch screen (5), wherein at least one functional symbol can be displayed by means of the touch screen (5), wherein a vehicle function which is assigned to the touch screen area (7) can be operated by touching a touch screen area (7) which displays the functional symbol, wherein there is preferably provision that at least one optic parameter which influences the optics of the operator control element (7; 35) can be set and/or adjusted automatically by means of the actuating device (25) as a function of the current state of the driver which is sensed by means of the driver's state-sensing device (11), and **in that** the actuating device (25) has a function symbol-actuating device (28) by means of which the form and/or the colour and/or the shape of the at least one functional symbol which is displayed by means of the touch screen (5) can be set and/or adjusted as an optic parameter.

13. The device according to one of the preceding claims, **characterized in that** at least one acoustic parameter which influences the acoustics of the operator control element (7; 35) can be set and/or adjusted automatically by means of the actuating device (25) as a function of the current state of the driver which is sensed by means of the driver's state-sensing device (11), and **in that** at least one acoustic feedback device (30) is provided by means of which an acoustic feedback signal can be output to the driver when the operator control element (7; 35) is activated, wherein the actuating device (25) has a signal-actuating device (34) by means of which the acoustic feedback signal of the feedback device can be set and/or adjusted as an acoustic parameter.

14. A method for assisting a driver of a vehicle, in particular of a utility vehicle, for operating a device according to one of the preceding claims, having at least one operator control element (7; 35) which can be activated by the driver and by means of which at least one vehicle function can be operated, wherein a driver's state-sensing device (11) is provided by means of which the current state of the driver can be sensed and/or detected, **characterized**
**in that** an actuating device (25) which is connected by signalling technology to the driver's state-sensing device (11) is provided, by means of which actuating device (25) at least one haptic parameter which influences the haptics of the operator control element (7; 35) is set and/or adjusted automatically as a function of the current state of the driver which is sensed by means of the driver's state-sensing device (11).

15. A vehicle, in particular a utility vehicle, having a device according to one of Claims 1 to 13 and/or for carrying out a method according to Claim 14.

## Revendications

1. Arrangement pour assister un conducteur d'un véhicule, notamment d'un véhicule utilitaire, comprenant au moins un élément de commande (7 ; 35) qui peut être actionné par le conducteur et au moyen duquel peut être commandée au moins une fonction du véhicule, un dispositif de détection d'état de conducteur (11) étant présent, au moyen duquel peut être détecté et/ou reconnu l'état actuel du conducteur, **caractérisé en ce**
**qu'**un dispositif de réglage (25) relié de manière signalétique au dispositif de détection d'état de conducteur (11) est présent, au moyen duquel peut être réglé et/ou ajusté automatiquement, en fonction de l'état actuel de conducteur détecté au moyen du dispositif de détection d'état de conducteur (11), au moins un paramètre haptique qui influence la propriété haptique de l'élément de commande (7 ; 35).

2. Arrangement selon la revendication 1, **caractérisé en ce que** le dispositif de détection d'état de conducteur (11) possède un dispositif de détection d'humeur (13) au moyen duquel peut être détectée et/ou reconnue l'humeur actuelle du conducteur, en prévoyant de préférence que le dispositif de détection d'humeur (13) possède un dispositif de détection d'expression faciale de conducteur (15) au moyen duquel peut être détectée et/ou reconnue l'expression faciale du conducteur.

3. Arrangement selon la revendication 1 ou 2, **caractérisé en ce que** le dispositif de détection d'état de conducteur (11) possède un dispositif de détection de mode de conduite (17) au moyen duquel peut être détecté et/ou reconnu le mode de conduite du conducteur, et/ou **en ce que** le dispositif de détection d'état de conducteur (11) possède un dispositif de détection de sélection musicale (19) au moyen duquel peut être détectée et/ou reconnue la sélection musicale actuelle du conducteur.

4. Arrangement selon l'une des revendications précédentes, **caractérisé en ce que** le dispositif de détection d'état de conducteur (11) possède un dispositif de détection d'informations corporelles (21) au moyen duquel peut être détectée au moins une information, notamment physiologique, à propos du corps et/ou à propos de l'état corporel actuel du conducteur, en prévoyant de préférence que l'au moins une information est formée par le sexe du conducteur actuel et/ou par le pouls actuel du conducteur et/ou par la température cutanée actuelle du conducteur.

5. Arrangement selon l'une des revendications précédentes, **caractérisé en ce que** le dispositif de détection d'état de conducteur (11) possède un dispositif de détection d'informations de trajet au moyen duquel peut être détectée au moins une information à propos du trajet actuel du véhicule (3), en prévoyant de préférence que l'au moins une information est formée par le chargement actuel du véhicule (3) et/ou par la longueur du parcours du véhicule (3).

6. Arrangement selon l'une des revendications précédentes, **caractérisé en ce que** l'élément de commande est formé par une touche (35), en prévoyant de préférence que la touche (35) peut être actionnée par pression et/ou peut être actionnée par le toucher.

7. Arrangement selon la revendication 6, **caractérisé en ce que** la touche (35) peut être actionnée par pression, le dispositif de réglage possédant un dispositif de réglage de course de touche (37) au moyen duquel une course de touche de la touche (35) peut être réglée et/ou être ajustée en tant que paramètre haptique.

8. Arrangement selon la revendication 6 ou 7, **caractérisé en ce que** le dispositif de réglage (25) possède un dispositif de chauffage et/ou de refroidissement au moyen duquel la température de surface de la touche (35) peut être réglée et/ou être ajustée en tant que paramètre haptique.

9. Arrangement selon l'une des revendications 5 à 7, **caractérisé en ce que** la touche (35) peut être actionnée par pression, le dispositif de réglage (25) possédant un dispositif de réglage de force de pressage (39) au moyen duquel peut être réglée et/ou être ajustée en tant que paramètre haptique une force de pressage servant à l'actionnement par pression de la touche (35).

10. Arrangement selon l'une des revendications 6 à 9, **caractérisé en ce qu'**au moins un paramètre optique qui influence l'optique de l'élément de commande (7 ; 35) peut être réglé et/ou ajusté automatiquement au moyen du dispositif de réglage (25) en fonction de l'état actuel du conducteur détecté au moyen du dispositif de détection d'état de conducteur (11), **en ce qu'**un dispositif d'éclairage (31) est présent, au moyen duquel la touche (35) peut être éclairée, le dispositif de réglage (25) possédant un dispositif de réglage d'éclairage (32) au moyen duquel l'éclairage de la touche (35) peut être réglé et/ou ajusté en tant que paramètre optique.

11. Arrangement selon la revendication 10, **caractérisé en ce que** la couleur et/ou la luminosité de l'éclairage de la touche (35) peut être réglée et/ou ajustée au moyen du dispositif de réglage d'éclairage (32) et/ou **en ce que** l'éclairage de la touche (35) peut être allumé et éteint au moyen du dispositif de réglage d'éclairage (32).

12. Arrangement selon l'une des revendications précédentes, **caractérisé en ce que** l'élément de commande est formé par un écran tactile (5), au moins un symbole de fonction pouvant être affiché au moyen de l'écran tactile (5), une fonction de véhicule associée à une zone d'écran tactile (7) qui affiche le symbole de fonction pouvant être commandée en touchant la zone d'écran tactile (7), en prévoyant de préférence qu'au moins un paramètre optique qui influence l'optique de l'élément de commande (7 ; 35) peut être réglé et/ou ajusté automatiquement au moyen du dispositif de réglage (25) en fonction de l'état actuel du conducteur détecté au moyen du dispositif de détection d'état de conducteur (11), et **en ce que** le dispositif de réglage (25) possède un dispositif de réglage de symbole de fonction (28) au moyen duquel peut être réglée et/ou ajustée, en tant que paramètre optique, la forme et/ou la couleur et/ou la configuration de l'au moins un symbole de fonction affiché au moyen de l'écran tactile (5).

13. Arrangement selon l'une des revendications précédentes, **caractérisé en ce qu'**au moins un paramètre acoustique qui influence l'acoustique de l'élément de commande (7 ; 35) peut être réglé et/ou ajusté automatiquement au moyen du dispositif de réglage (25) en fonction de l'état actuel du conducteur détecté au moyen du dispositif de détection d'état de conducteur (11), **en ce qu'**au moins un dispositif de rétroaction acoustique (30) est présent, au moyen duquel un signal de rétroaction acoustique peut être délivré au conducteur lors d'un actionnement de l'élément de commande (7 ; 35), le dispositif de réglage (25) possédant un dispositif de réglage de signal (34) au moyen duquel peut être réglé et/ou ajusté en tant que paramètre acoustique le signal de rétroaction acoustique du dispositif de rétroaction acoustique.

14. Procédé pour assister un conducteur d'un véhicule, notamment d'un véhicule utilitaire, pour faire fonctionner un arrangement selon l'une des revendications précédentes, comprenant au moins un élément de commande (7 ; 35) qui peut être actionné par le conducteur et au moyen duquel peut être commandée au moins une fonction du véhicule, un dispositif de détection d'état de conducteur (11) étant présent, au moyen duquel peut être détecté et/ou reconnu l'état actuel du conducteur, **caractérisé en ce**
**qu'**un dispositif de réglage (25) relié de manière signalétique au dispositif de détection d'état de conducteur (11) est présent, au moyen duquel peut être réglé et/ou ajusté automatiquement, en fonction de l'état actuel de conducteur détecté au moyen du dispositif de détection d'état de conducteur (11), au moins un paramètre haptique qui influence la propriété haptique de l'élément de commande (7 ; 35).

15. Véhicule, notamment véhicule utilitaire, comprenant un arrangement selon l'une des revendications 1 à 13 et/ou destiné à mettre en oeuvre un procédé selon la revendication 14.
